# EUROPÄISCHE PATENTSCHRIFT

(11) **EP 1 048 538 B1**
(45) Veröffentlichungstag und Bekanntmachung des Hinweises auf die Patenterteilung: **21.01.2004**
(21) Anmeldenummer: 00104602.8
(22) Anmeldetag: 02.03.2000
(51) Int. Cl.: B60T 7/12, B60K 31/00, B60K 41/20

(54) **Steuerungssystem mit automatischem Bremsbetätigungsmodus für ein Fahrzeug**
Control system with automatic braking for a vehicle
Système de contrôle avec freinage automatique pour un véhicule

(30) Priorität: 30.04.1999 DE 19919675
(43) Veröffentlichungstag der Anmeldung: 02.11.2000
(73) Patentinhaber: DaimlerChrysler AG, 70567 Stuttgart (DE)
(72) Erfinder: Müller, Armin, 75391 Gechingen (DE); Röhrig-Gericke, Thomas, 71093 Weil im Schönbuch (DE); Schöb, Reinhold, 71126 Gäufelden (DE); Tröster, Harry, Dr., 71732 Tamm (DE)

(56) Entgegenhaltungen:
- DE-A- 4 118 332
- DE-A- 19 607 048
- US-A- 4 146 108

## Beschreibung

Die Erfindung betrifft ein Steuerungssystem für ein Fahrzeug nach dem Oberbegriff des Anspruches 1.

Aus der Druckschrift DE 41 18 332 A1 ist ein System zur Steuerung einer Antriebseinrichtung eines Fahrzeugs bekannt, das den Fahrer im Stop-and-Go-Betrieb auf überfüllten Straßen entlasten soll. Im Stop-and-Go-Betrieb wird die Antriebskraft des Fahrzeuges selbsttätig so gesteuert, daß die aktuelle Fahrzeuggeschwindigkeit in eine vorgegebene Zielgeschwindigkeit übergeht. Für den Fall, daß Fahrer das Bremspedal betätigt, wird die Antriebskraft wird automatisch unterbrochen. Löst der Fahrer das Bremspedal, so nimmt das Fahrzeug wieder die Zielgeschwindigkeit ein.

Mit diesem Steuerungssystem ist zwar möglich, im Stop-and-Go-Betrieb das Fahrzeug ausschließlich über die Betätigung des Bremspedales zu bewegen. Dies setzt jedoch voraus, daß die Zielgeschwindigkeit, mit der sich das Fahrzeug im Stau maximal bewegen soll, vom Fahrer vorgegeben wird. Auf Grund der sich üblicherweise permanent ändernden Verkehrssituation ist der Fahrer zur Vermeidung kritischer Situationen gezwungen, entweder mit erhöhter Aufmerksamkeit das Verkehrsgeschehen zu beobachten und gegebenenfalls das Bremspedal zu betätigen, um zu verhindern, daß das Fahrzeug versehentlich auf eine zu hohe, dem aktuellen Verkehr nicht angepaßte Zielgeschwindigkeit beschleunigt, oder der Fahrer muß permanent die Zielgeschwindigkeit auf die aktuelle Situation anpassen. In beiden Fällen wird das Ziel, den Fahrer zu entlasten, nur unzureichend erreicht.

Der Erfindung liegt das Problem zugrunde, mit einfachen Mitteln und geringem Aufwand ein den Fahrer eines Kraftfahrzeugs entlastendes Steuerungssystem zu schaffen, das bei hohem Verkehrsaufkommen eine sichere Steuerung des Fahrzeugs erlaubt. Es sollen insbesondere die Anforderungen an den Fahrer so gering wie möglich gehalten werden.

Dieses Problem wird erfindungsgemäß mit den Merkmalen des Anspruches 1 gelöst.

Das erfindungsgemäße Steuerungssystem geht von dem Grundgedanken aus, daß der Fahrer aktiv werden muß, um das Fahrzeug zu bewegen. Wird der Fahrer dagegen nicht von sich aus aktiv, so wird eine Bremskraft-Unterstützungseinrichtung selbsttätig zugeschaltet, wodurch das Fahrzeug automatisch abgebremst wird. Diese Verfahrensweise hat den Vorteil, daß das Fahrzeug ohne aktive Betätigung des Fahrers automatisch abgebremst wird, wodurch die Sicherheit bei Fehlreaktionen des Fahrers gesteigert ist, beispielsweise bei verspäteter Reaktion. Ein weiterer wichtiger Vorteil liegt darin, daß der Fahrer nicht gezwungen ist, Vorgaben wie zum Beispiel Zielwerte in das Steuerungssystem einzugeben.

Das erfindungsgemäße Steuerungssystem eignet sich in besonderer Weise zum Fahren im Stau, wobei eine Adaption an das Verkehrsgeschehen über die vom Fahrer durchzuführende Betätigung des Gaspedals erfolgt, so daß keine zusätzlichen aufwendigen Maßnahmen bzw. Einrichtungen für eine verkehrsangepaßte Nachführung des Systems erforderlich sind. Zugleich ist die Sicherheit durch die automatische Bremsenbetätigung für den Fall, daß das Gaspedal unbetätigt bleibt, gesteigert, wodurch ausbleibende oder zu spät erfolgende Reaktionen des Fahrers kompensiert werden. Der Modus "Beschleunigen durch den Fahrer - selbsttätiges Bremsen" wird selbsttätig ausgelöst, indem in einer Erfassungseinrichtung des Steuerungssystems eine definierte Betätigung des Bremspedals festgestellt wird, welche mit einem vorgegebenen Bremsschema übereinstimmt. Die selbsttätige Auslösung des insbesondere für den Stop-and-Go-Betrieb geeigneten Modus "Beschleunigen - selbsttätiges Bremsen" hat den Vorteil, daß der Fahrer von sich aus nicht aktiv werden muß, um den für das Fahren im Stau idealen Modus auszulösen, vielmehr erkennt das System einen Stau selbsttätig. Es sind außerdem keine vorausschauenden Sensoren erforderlich, beispielsweise Radarsensoren oder optische Erfassungsgeräte, mittels denen vorausfahrende Fahrzeuge detektiert werden können. Zur Erkennung eines Staus reicht eine Erfassungseinrichtung aus, mit der die aktuelle Bremspedalposition feststellbar ist.

Vorteilhaft wird der Modus "Beschleunigen - selbsttätiges Bremsen" ausgelöst, wenn das Bremspedal innerhalb eines definierten Zeitraumes zumindest zweimal aufeinanderfolgend betätigt wird, wobei zweckmäßig bei jedem einzelnen Bremsvorgang das Fahrzeug bis zum Stillstand verzögert wird und zwischen beiden Bremsvorgängen das Bremspedal gelöst wird. Dieses Bremsschema kann als zuverlässiges Auslösekriterium herangezogen werden, ein versehentliches, unbeabsichtigtes Auslösen kann mit hinreichender Sicherheit ausgeschlossen werden, da die Auslösebedingungen mit ausreichender Genauigkeit spezifiziert sind, um Verwechslungen mit anderen Verkehrssituationen auszuschließen, beispielsweise Abbremsen bis zum Stillstand an einer Ampel.

In bevorzugter Weiterbildung wird während der Bremsphase im Modus "Beschleunigung - selbsttätiges Bremsen" ein Bremsdruck aufgebaut, der eine gewünschte Verzögerungskennlinie des Fahrzeugs zur Folge hat. Die Verzögerungskennlinie bzw. -funktion kann so gewählt werden, daß ein besonders komfortables Anhalten realisiert werden kann. Hierbei können Längselastizitäten des Fahrzeuges in der Weise berücksichtigt werden, daß Längsschwingungen im Moment des Anhaltens minimiert werden.

Vorteilhaft wird der Bremsdruck auch im Stillstand des Fahrzeugs für den Fall aufrechterhalten, daß das Gaspedal unbetätigt bleibt, um ein größtmögliches Maß an Sicherheit zu gewährleisten. Hierbei kann auch das Straßengefälle berücksichtigt werden, indem der Bremsdruck dem Straßengefälle entsprechend in der Weise eingestellt wird, daß das Fahrzeug im Stillstand verharrt. Zusätzlich oder alternativ zur Betätigung der Radbremse kann im Stillstand des Fahrzeugs auch eine Feststellbremse aktiviert werden. Die Aktivierung der Feststellbremse bietet den Vorteil, daß unabhängig vom Fahrzeugzustand eine das Fahrzeug festsetzende Bremskraft erzeugt werden kann. So ist es insbesondere möglich, das Fahrzeug auch bei abgeschalteter Brennkraftmaschine und/oder beim Aussteigen des Fahrers festzusetzen.

Als auflösende Bedingung, bei deren Erfüllung der Modus "Beschleunigen - selbsttätiges Bremsen" wieder aufgehoben wird, wird vorzugsweise eine Fahrzeug-Zustandsgröße auf Überschreitung eines vorgegebenen Grenzwertes untersucht. Als Fahrzeug-Zustandsgröße kommt hierbei insbesondere die Fahrzeuggeschwindigkeit und/oder der Lenkradwinkel in Betracht. Diese Zustandsgrößen stehen üblicherweise ohnehin für weitere, daß Fahrzeug stabilisierende Regeleingriffe zur Verfügung.

Weiter Vorteile und zweckmäßige Ausführungsformen sind den weiteren Ansprüchen, der Figurenbeschreibung und den Zeichnungen zu entnehmen. Es zeigen:
- Fig. 1: eine schematische Darstellung eines Fahrzeuges mit Steuerungssystem,
- Fig. 2: ein Ablaufschema für die Steuerung eines Fahrzeugs im Stop-and-Go-Betrieb.

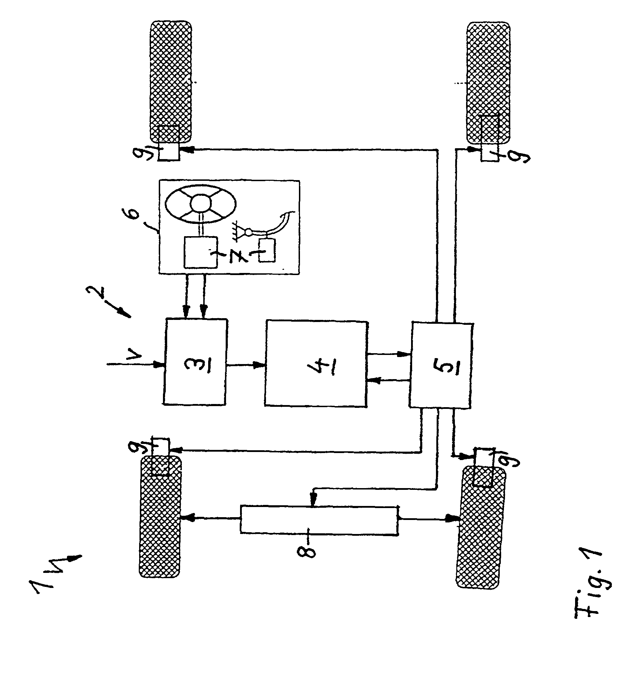

Das in Fig. 1 dargestellte Kraftfahrzeug 1 umfaßt ein Steuerungssystem 2, das im Stop-and-Go-Betrieb im Falle eines Verkehrsstaus bzw. bei dichtem Verkehr ein teilweise automatisiertes Fahren ermöglicht. Das Steuerungssystem 2 besteht aus einer Erfassungseinrichtung 3, einer Regel- und Steuereinheit 4 sowie einer Hydraulikeinheit 5. Die Erfassungseinrichtung 3 dient der Ermittlung bzw. Erzeugung von Signalen, welche den Betriebs- und Fahrzeugzustand des Fahrzeuges charakterisieren. Der Erfassungseinrichtung 3 ist insbesondere eine Meßeinrichtung 7 zugeordnet, welche den aktuellen Lenkwinkel sowie die aktuelle Betätigungsstellung des Gaspedals und des Bremspedals mißt. Als weitere Betriebs- und Zustandsgrößen des Fahrzeuges können der Erfassungseinrichtung 3 die aktuelle Fahrzeuggeschwindigkeit v sowie gegebenenfalls Fahrzeugparameter wie Masse- bzw. Reibwert zugeführt werden.

Die in der Erfassungseinrichtung 3 ermittelten bzw. der Erfassungseinrichtung zugeführten Fahrzeug-Betriebs- und Zustandsgrößen werden der Regel- und Steuereinheit 4 als Eingangssignal zugeführt. Darüberhinaus empfängt die Regel- und Steuereinheit 4 Ist-Signale aus der Hydraulikeinheit 5, welche den aktuellen Zustand von Aktuatoren 8, 9 für die Lenkung und die Radbremse repräsentieren. In der Regel- und Steuereinheit 4 werden gemäß einer hinterlegten Regelvorschrift unter Berücksichtigung der zugeführten Betriebs- und Zustandsgrößen sowie der zugeführten Ist-Signale Soll-Signale generiert, welche der Hydraulikeinheit 5 zur Einstellung des Lenkaktuators 8 und der Bremsaktuatoren 9 zugeführt werden.

Das Steuerungssystem 2 beinhaltet eine Bremskraft-Unterstützungseinrichtung zur automatischen Erzeugung von Bremskraft unabhängig von der aktuellen Pedalstellung des Bremspedales. Die Bremskraft-Unterstützungseinrichtung dient einerseits zur Verstärkung einer vom Fahrer gewünschten Bremskraftanforderung und andererseits zur automatisierten bzw. teilweise automatisierten Generierung von Bremskraft in Abhängigkeit der aktuellen Verkehrssituation. Die automatisierte Bremskrafterzeugung wird jedoch nur für den Fall durchgeführt, daß die entsprechenden Auslösebedingungen hierfür erfüllt sind.

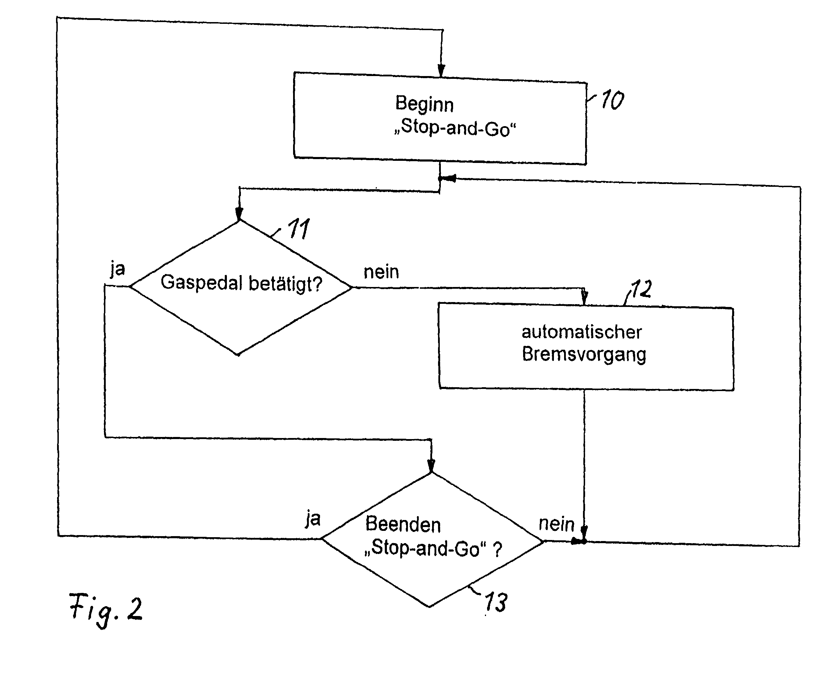

Fig. 2 zeigt ein Verfahrensschema für die Durchführung eines automatisierten Bremsvorganges im Stop-and-Go-Betrieb. In einem ersten Verfahrensschritt 10 wird zunächst abgeprüft, ob die Bedingungen für den Beginn des Stop-and-Go-Betriebes vorliegen. Diese Bedingungen werden anhand eines definierten Betätigungsschemas für das Bremspedal überprüft. Zur Auslösung des durch einen Modus "Beschleunigen - selbsttätiges Bremsen" gekennzeichneten Stop-and-Go-Betriebes muß das Bremspedal gemäß einer bevorzugten Ausführung innerhalb eines definierten Zeitraumes mindestens zweimal aufeinanderfolgend betätigt worden sein, wobei bei jedem Bremsvorgang das Fahrzeug bis auf eine untere Grenzgeschwindigkeit verzögert werden muß, insbesondere zum Stillstand gebracht werden muß. Zwischen aufeinanderfolgenden Bremsvorgängen muß das Bremspedal gelöst werden. Die Erfüllung dieses speziellen Bremsschemas stellt sicher, daß der Stop-and-Go-Betrieb auch ohne vorausschauenden Sensor sicher erkannt wird und die Gefahr von Verwechslungen ausgeschlossen ist.

Es kann gegebenenfalls zweckmäßig sein, als Auslösekriterium mehr als zwei einzelne Bremsvorgänge vorzugeben. Weiterhin ist es möglich, für jeden Bremsvorgang als zu erfüllende Bedingung eine Mindestverzögerung vorzugeben. Es kann außerdem genügen, zwischen zwei aufeinanderfolgenden Bremsvorgängen das Bremspedal nicht vollständig, sondern zumindest teilweise zu lösen.

Als alternatives Bremsschema, welches zur Auslösung im Stop-and-Go-Betrieb in Frage kommt, kann gemäß einer weiteren Ausführung überprüft werden, ob das Bremspedal zumindest einmal vollständig durchgedrückt worden ist und zweckmäßig darüberhinaus das Fahrzeug eine weitere Bedingung erfüllt, insbesondere bis zum Stillstand abgebremst wurde.

Sofern die Bedingungen für den Stop-and-Go-Betrieb vorliegen, wird im Verfahrensschritt 10 in den Betriebsmodus "Beschleunigen - selbsttätiges Bremsen" umgeschaltet, welcher durch die Verfahrensschritte 11 und 12 gekennzeichnet ist.

Im Verfahrensschritt 11 wird zunächst überprüft, ob das Gaspedal vom Fahrer betätigt wird. Sofern dies nicht der Fall ist ("Nein"-Zweig) wird zum Verfahrensschritt 12 fortgefahren, gemäß dem ein automatischer Bremsvorgang durchgeführt wird, unabhängig von der Betätigung des Bremspedales. Diese Kombination der Verfahrensschritte 11 und 12 hat zur Folge, daß der Stop-and-Go-Betrieb ausschließlich aus den Fahrzuständen Beschleunigung, ausgelöst und kontrolliert vom Fahrer, sowie Bremsung bzw. Stillstand, ausgelöst und kontrolliert durch die Bremskraft-Unterstützungseinrichtung, besteht. Sobald der Fahrer das Gaspedal freigibt, wird ein automatisierter Bremsvorgang durchgeführt.

Falls im Verfahrensschritt 11 festgestellt wird, daß der Fahrer das Gaspedal betätigt ("Ja"-Zweig), so wird zum Verfahrensschritt 13 fortgefahren, gemäß dem abgeprüft wird, ob die Bedingungen für die Beendigung des Stop-and-Go-Betriebes vorliegen. Als auflösende Bedingung wird zweckmäßig zumindest eine Fahrzeugzustandsgröße auf Überschreitung eines Grenzwertes überprüft. Als zu betrachtende Fahrzeugzustandsgröße kommen hierbei die Fahrzeuggeschwindigkeit und der Lenkradwinkel in Betracht, zweckmäßige Grenzwerte sind 60 km/h für die Geschwindigkeit und etwa 120° für den Lenkradwinkel. Sofern die Bedingungen für die Beendigung des Modus "Beschleunigung - selbsttätiges Bremsen" erfüllt sind, wird dem Ja-Zweig des Verfahrensschrittes 13 entsprechend zum ersten Verfahrensschritt 10 zurückgekehrt und im darauffolgenden Zyklus erneut überprüft, ob die Bedingungen für einen erneuten Beginn des Stop-and-Go-Betriebes vorliegen. Sofern die auflösende Bedingung im Verfahrensschritt 13 nicht erfüllt ist, wird dem Nein-Zweig entsprechend zum Anfang des Verfahrensschrittes 11 zurückgekehrt. In diesem Fall befindet sich das Steuerungssystem nach wie vor im Modus "Beschleunigen - selbsttätiges Bremsen", bei dem in einem neuen Zyklus die Verfahrensschritte 11, 12, 13 abgeprüft werden.

Alternativ zum automatisierten Beginn bzw. zum automatisierten Ende des Stop-and-Go-Betriebes kann ein vom Fahrer bewußt erzeugter manueller Befehl für die Auslösung und/oder Beendigung des Modus "Beschleunigen - selbsttätiges Bremsen" berücksichtigt werden. Die manuelle Auslösung kann über einen Schalter, einen Tempomathebel oder auch durch sonstige Körperreaktionen wie zum Beispiel Spracheingabe erfolgen, ebenso die Beendigung.

Während des Modus "Beschleunigen - selbsttätiges Bremsen" wird zweckmäßig in den Phasen selbsttätiger Bremsung auch nach Erreichen des Stillstandes ein Bremsdruck aufrechterhalten. Dieser Bremsdruck wird zweckmäßig so hoch gewählt, daß das Fahrzeug auch an Gefällstrecken nicht selbständig wegrollt. Gegebenenfalls wird über eine geeignete Meßeinrichtung das Gefälle sensiert und der Ermittlung des erforderlichen Bremsdruckes zugrunde gelegt.

Als weitere Option kann durch geeignete Sensoren berücksichtigt werden, ob der Fahrer das Fahrzeug verlassen möchte bzw. verlassen hat, beispielsweise anhand von Sensoren an der Türe bzw. von Gewichtssensoren im Fahrersitz. In diesem Fall wird zweckmäßig automatisch die Feststellbremse betätigt.

Das vorgeschriebene Steuerungssystem eignet sich insbesondere für den Einsatz in elektrohydraulischen Bremssystemen, es kann darüber hinaus aber auch in anderweitigen Bremssystemen eingesetzt werden. Das Steuerungssystem kann außerdem mit elektronischen Stabilitätsprogrammen im Fahrzeug gekoppelt werden. Darüberhinaus ist auch eine Kopplung mit Antriebs-Schlupf-Systemen und elektronischen Traktionssystemen möglich, mit denen eine Abbremsung über die Hinterachse realisiert werden kann.

## Patentansprüche

1. Steuerungssystem für ein Fahrzeug, mit einer Erfassungseinrichtung (3) zur Erzeugung von den Betriebs- und Fahrzeugzustand beschreibenden Eingangssignalen, welche einer Regel- und Steuereinheit (4) zuführbar sind, in der Stellsignale für die Zu- und Abschaltung einer den Fahrzeugzustand beeinflussenden Fahrzeugkomponente erzeugbar sind,
**dadurch gekennzeichnet,**
- **daß** die einzustellende Fahrzeugkomponente eine Bremskraft-Unterstützungseinrichtung zur automatischen Erzeugung von Bremskraft ist,
- **daß** in der Erfassungseinrichtung (3) die Betätigung des Gaspedals und des Bremspedals feststellbar ist,
- **daß** ein Modus "Beschleunigen - selbsttätiges Bremsen" einstellbar ist, bei dem
• ein die Bremskraft-Unterstützungseinrichtung zuschaltendes Stellsignal für den Fall erzeugbar ist, daß das Gaspedal unbetätigt ist,
• die Bremskraft-Unterstützungseinrichtung für den Fall abschaltbar ist, daß das Gaspedal betätigt ist,
- daß der Modus "Beschleunigen - selbsttätiges Bremsen" selbsttätig für den Fall ausgelöst wird, daß das Bremspedal innerhalb eines definierten Zeitraumes in vorgeschriebener Weise betätigt wurde.

2. Steuerungssystem nach Anspruch 1,
**dadurch gekennzeichnet, daß** zum Auslösen des Modus "Beschleunigen - selbsttätiges Bremsen" das Bremspedal innerhalb eines definierten Zeitraumes zumindest zweimal aufeinanderfolgend betätigt werden muß.

3. Steuerungssystem nach Anspruch 1 oder 2,
**dadurch gekennzeichnet,**
**daß** bei jedem Bremsvorgang das Fahrzeug bis zum Stillstand verzögert werden muß.

4. Steuerungssystem nach einem der Ansprüche 1 bis 3,
**dadurch gekennzeichnet,**
**daß** bei jedem Bremsvorgang eine Mindestverzögerung erreicht werden muß.

5. Steuerungssystem nach einem der Ansprüche 1 bis 4,
**dadurch gekennzeichnet,**
**daß** zwischen zwei aufeinanderfolgenden Bremsvorgängen das Bremspedal zumindest teilweise gelöst werden muß.

6. Steuerungssystem nach Anspruch 1,
**dadurch gekennzeichnet,**
**daß** zum Auslösen des Modus "Beschleunigen - selbsttätiges Bremsen" das Bremspedal zumindest einmal vollständig durchgedrückt werden muß.

7. Steuerungssystem nach einem der Ansprüche 1 bis 6,
**dadurch gekennzeichnet,**
**daß** der Modus "Beschleunigen - selbsttätiges Bremsen" im Fahrzeug angezeigt wird.

8. Steuerungssystem nach einem der Ansprüche 1 bis 7,
**dadurch gekennzeichnet,**
**daß** während der Bremsphase im Modus "Beschleunigen - selbsttätiges Bremsen" in der Bremskraft-Unterstützungseinrichtung ein einer vorgegebenen Kennlinie entsprechender Bremsdruck aufgebaut wird.

9. Steuerungssystem nach einem der Ansprüche 1 bis 8,
**dadurch gekennzeichnet,**
**daß** während der Bremsphase im Modus "Beschleunigen - selbsttätiges Bremsen" in der Bremskraft-Unterstützungseinrichtung ein Bremsdruck aufgebaut wird, der einer vorgegebenen Verzögerungskennlinie entspricht.

10. Steuerungssystem nach Anspruch 9,
**dadurch gekennzeichnet,**
**daß** mit konstanter Verzögerung gebremst wird.

11. Steuerungssystem nach einem der Ansprüche 1 bis 10,
**dadurch gekennzeichnet,**
**daß** im Modus "Beschleunigen - selbsttätiges Bremsen" das Fahrzeug in der Bremsphase bis zum Stillstand abgebremst wird.

12. Steuerungssystem nach einem der Ansprüche 1 bis 11,
**dadurch gekennzeichnet,**
**daß** im Modus "Beschleunigen - selbsttätiges Bremsen" im Stillstand des Fahrzeugs der Bremsdruck aufrechterhalten wird, wenn das Gaspedal unbetätigt bleibt.

13. Steuerungssystem nach Anspruch 12,
**dadurch gekennzeichnet,**
**daß** das Straßengefälle ermittelt wird und der Bremsdruck dem Straßengefälle entsprechend in der Weise eingestellt wird, daß das Fahrzeug im Stillstand verharrt.

14. Steuerungssystem nach einem der Ansprüche 1 bis 13,
**dadurch gekennzeichnet,**
**daß** im Modus "Beschleunigen - selbsttätiges Bremsen" im Stillstand des Fahrzeugs in dem Zeitraum, während dem das Gaspedal unbetätigt bleibt, die Feststellbremse betätigt wird.

15. Steuerungssystem nach einem der Ansprüche 1 bis 14,
**dadurch gekennzeichnet,**
**daß** der Modus "Beschleunigen - selbsttätiges Bremsen" aufgehoben wird, falls zumindest eine Fahrzeug-Zustandsgröße einen Grenzwert überschreitet.

16. Steuerungssystem nach Anspruch 15,
**dadurch gekennzeichnet,**
**daß** die zu betrachtende Fahrzeug-Zustandsgröße die Fahrzeuggeschwindigkeit ist.

17. Steuerungssystem nach Anspruch 15 oder 16,
**dadurch gekennzeichnet,**
**daß** die zu betrachtende Fahrzeug-Zustandsgröße der Lenkradwinkel ist.

## Claims

1. Control system for a vehicle, with a reception device (3) for the generation of input signals that describe the operating and vehicle condition, which can be transmitted to a regulation and control unit (4) in which control signals can be produced for the switching on or off of a vehicle component that can influence the condition of the vehicle,
**characterised in that**
- the vehicle component to be adjusted is a braking force supporting device for the automatic production of braking force,
- the reception device (3) can detect the actuation of the accelerator pedal and the brake pedal,
- an "acceleration - automatic braking" mode can be engaged, in which:
• a control signal which switches on the braking force supporting device can be produced, when the accelerator pedal is not actuated,
• the braking force supporting device can be switched off when the accelerator pedal is actuated,
- the "acceleration - automatic braking" mode is automatically engaged when the brake pedal has been actuated in a prescribed way within a defined time period.

2. Control system according to Claim 1,
**characterised in that**
to engage to "acceleration - automatic braking" mode, the brake pedal must be actuated at least twice consecutively within a defines time.

3. Control system according to Claims 1 or 2,
**characterised in that**
at each braking process the vehicle must be decelerated to rest.

4. Control system according to any of Claims 1 to 3,
**characterised in that**
at each braking process a minimum deceleration must be attained.

5. Control system according to any of Claims 1 to 4,
**characterised in that**
between two consecutive braking processes the brake pedal must be at least partly released.

6. Control system according to Claim 1,
**characterised in that**
to engage the "acceleration - automatic braking" mode, the brake pedal must be fully depressed at least once.

7. Control system according to any of Claims 1 to 6,
**characterised in that**
the "acceleration - automatic braking" mode is displayed in the vehicle.

8. Control system according to any of Claims 1 to 7,
**characterised in that**
during the braking phase in the "acceleration - automatic braking" mode, a braking pressure corresponding to a predetermined characteristic curve is built up in the braking force supporting device.

9. Control system according to any of Claims 1 to 8,
**characterised in that**
during the braking phase in the "acceleration - automatic braking" mode, a braking pressure corresponding to a predetermined characteristic deceleration curve is built up in the braking force supporting device.

10. Control system according to Claim 9,
**characterised in that**
braking is carried out with a constant deceleration.

11. Control system according to any of Claims 1 to 10,
**characterised in that**
in the "acceleration - automatic braking" mode, during the braking phase the vehicle is braked to rest.

12. Control system according to any of Claims 1 to 11,
**characterised in that**
in the "acceleration - automatic braking" mode, when the vehicle is at rest the braking pressure is maintained while the accelerator pedal remains unactuated.

13. Control system according to Claim 12,
**characterised in that**
the inclination of the road is determined and the braking pressure is adjusted as a function of the road inclination in such manner that the vehicle remains at rest.

14. Control system according to any of Claims 1 to 13,
**characterised in that**
in the "acceleration - automatic braking" mode, when the vehicle is at rest the holding brake is actuated during such time that the accelerator pedal remains unactuated.

15. Control system according to any of Claims 1 to 14,
**characterised in that**
the "acceleration - automatic braking" mode is disengaged in the event that at least one vehicle condition parameter exceeds a limit value.

16. Control system according to Claim 15,
**characterised in that**
the vehicle condition parameter considered in the speed of the vehicle.

17. Control system according to Claims 15 or 16,
**characterised in that**
the vehicle condition parameter considered in the steering wheel angle.

## Revendications

1. Système de commande pour un véhicule, comprenant un dispositif de détection (3) servant à générer des signaux d'entrée décrivant l'état du fonctionnement et du véhicule, lesquels signaux d'entrée peuvent être fournis à une unité de réglage et de commande (4) dans laquelle peuvent être générés des signaux de réglage pour l'activation et l'arrêt d'un composant du véhicule influençant l'état du véhicule,
**caractérisé**
- **en ce que** le composant du véhicule à régler est un dispositif d'assistance de la force de freinage pour la production automatique d'une force de freinage,
- **en ce que** l'actionnement de la pédale d'accélérateur et de la pédale de frein peut être constaté dans le dispositif de détection (3),
- **en ce qu'**un mode "accélération - freinage automatique" est réglable, au cours duquel :
- - un signal de réglage activant le dispositif d'assistance de la force de freinage peut être généré, au cas où la pédale d'accélérateur n'est pas actionnée,
- - le dispositif d'assistance de la force de freinage peut être arrêté, au cas où la pédale d'accélérateur est actionnée,
- en ce que le mode "accélération - freinage automatique" est déclenché automatiquement, au cas où la pédale de frein a été actionnée de façon prescrite, dans un laps de temps défini.

2. Système de commande selon la revendication 1, **caractérisé en ce que**, pour le déclenchement du mode "accélération - freinage automatique", la pédale de frein doit être actionnée au moins deux fois de suite dans un laps de temps défini.

3. Système de commande selon la revendication 1 ou 2, **caractérisé en ce que**, lors de chaque freinage, le véhicule doit être ralenti jusqu'à l'arrêt.

4. Système de commande selon l'une des revendications 1 à 3, **caractérisé en ce que**, lors de chaque freinage, une décélération minimum doit être atteinte.

5. Système de commande selon l'une des revendications 1 à 4, **caractérisé en ce que**, entre deux freinages qui se suivent, la pédale de frein doit être au moins partiellement relâchée.

6. Système de commande selon la revendication 1, **caractérisé en ce que**, pour le déclenchement du mode "accélération - freinage automatique", la pédale de frein doit être enfoncée complètement au moins une fois.

7. Système de commande selon l'une des revendications 1 à 6, **caractérisé en ce que** le mode "accélération - freinage automatique" est indiqué dans le véhicule.

8. Système de commande selon l'une des revendications 1 à 7, **caractérisé en ce que**, pendant la phase de freinage au cours du mode "accélération - freinage automatique", une pression de freinage correspondant à une courbe caractéristique prédéterminée est accumulée dans le dispositif d'assistance de la force de freinage.

9. Système de commande selon l'une des revendications 1 à 8, **caractérisé en ce que**, pendant la phase de freinage au cours du mode "accélération - freinage automatique", une pression de freinage est accumulée dans le dispositif d'assistance de la force de freinage, laquelle pression de freinage correspond à une courbe caractéristique de décélération prédéterminée.

10. Système de commande selon la revendication 9, **caractérisé en ce que** le freinage est effectué à décélération constante.

11. Système de commande selon l'une des revendications 1 à 10, **caractérisé en ce qu'**au cours du mode "accélération - freinage automatique", le véhicule, pendant la phase de freinage, est freiné jusqu'à l'arrêt.

12. Système de commande selon l'une des revendications 1 à 11, **caractérisé en ce qu'**au cours du mode "accélération - freinage automatique", lorsque le véhicule est à l'arrêt, la pression de freinage est maintenue si la pédale d'accélérateur reste non actionnée.

13. Système de commande selon la revendication 12, **caractérisé en ce que** la pente de la route est calculée et la pression de freinage est réglée de façon correspondant à la pente de la route, de manière telle que le véhicule reste à l'arrêt.

14. Système de commande selon l'une des revendications 1 à 13, **caractérisé en ce qu'**au cours du mode "accélération - freinage automatique", lorsque le véhicule est à l'arrêt, le frein d'arrêt est actionné pendant le laps de temps au cours duquel la pédale d'accélération reste non actionnée.

15. Système de commande selon l'une des revendications 1 à 14, **caractérisé en ce que** le mode "accélération - freinage automatique" est supprimé, au cas où au moins une variable d'état du véhicule dépasse une valeur limite.

16. Système de commande selon la revendication 15, **caractérisé en ce que** la variable d'état du véhicule à considérer est la vitesse du véhicule.

17. Système de commande selon la revendication 15 ou 16, **caractérisé en ce que** la variable d'état du véhicule à considérer est l'angle au volant de direction.
